**Europäisches Patentamt**

**European Patent Office**

**Office européen des brevets**

(11) Veröffentlichungsnummer: **0 140 131**
**A2**

(12) # EUROPÄISCHE PATENTANMELDUNG

(21) Anmeldenummer: **84111160.2**

(22) Anmeldetag: **19.09.84**

(51) Int. Cl.⁴: **C 08 F 6/02**

(30) Priorität: **01.10.83 DE 3335824**

(43) Veröffentlichungstag der Anmeldung:
**08.05.85 Patentblatt 85/19**

(84) Benannte Vertragsstaaten:
**AT BE DE FR GB IT LU NL**

(71) Anmelder: **Ruhrchemie Aktiengesellschaft**
**Bruchstrasse 219**
**D-4200 Oberhausen 13(DE)**

(72) Erfinder: **Hobes, John, Dr. Dipl.-Chem.**
**Theodor-Strom-Strasse 4**
**D-4220 Dinslaken(DE)**

(72) Erfinder: **Spaleck, Walter, Dr. Dipl.-Chem.**
**Alexander-Fleming-Strasse 2**
**D-4290 Bocholt(DE)**

(72) Erfinder: **Payer, Wolfgang, Dr. Dipl.-Chem.**
**Zedernweg 58**
**D-4230 Wesel 1(DE)**

(74) Vertreter: **Reichelt, Karl-Heinz, Dr.**
**m. Br. Ruhrchemie Aktiengesellschaft Abt. PLD Postfach 13 01 60**
**D-4200 Oberhausen 13(DE)**

(54) Verfahren zur Polymerisation und Copolymerisation von Ethylen.

(57) Die Desaktivierung von Katalysatorsystemen aus einer Übergangsmetallverbindung und einer organischen Aluminiumverbindung, die zur Polymerisation von Ethylen oder zur Copolymerisation von Ethylen mit einem α-Olefin bei Drücken von 300 bis 3.500 bar und Temperaturen zwischen 150 und 350 °C eingesetzt werden, erfolgt mit Polyglykolen.

Oberhausen 11, 29.09.1983
PLD rcht-mm      - R 1956 -

Ruhrchemie Aktiengesellschaft, Oberhausen 11

### Verfahren zur Polymerisation und Copolymerisation von Ethylen

Die Erfindung betrifft ein kontinuierliches Verfahren zur Polymerisation und Copolymerisation von Ethylen bei Temperaturen zwischen 150 und 350 °C und Drücken von 300 bis 3.500 bar in Gegenwart von Ziegler-Katalysatoren.

Die Polymerisation und Copolymerisation von Ethylen in den genannten Temperatur- undDruckbereichen ist bekannt. Als Katalysatoren oder Initiatoren können die verschiedensten Substanzen eingesetzt werden, die im Verlauf der Reaktion Radikale oder Ionen bilden. Gebräuchliche Katalysatoren sind z.B. Sauerstoff, Peroxide wie Diacylperoxide oder Cumolhydroperoxid und aliphatische Azoverbindungen wie $\alpha,\alpha'$-Azoisobutyronitril. Auch Ziegler-Katalysatoren, die ursprünglich für die Niederdruckpolymerisation von Ethylen und Propylen entwickelt worden waren, finden inzwischen bei Hochdruckprozessen Anwendung.

Die Polymerisation oder Copolymerisation von Ethylen unter hohem Druck erfolgt in Autoklaven oder in sogenannten Röhrenreaktoren. Nach dem Verlassen des Hochdruckreaktors wird das Reaktionsgemisch in wenigstens einen Separator geleitet, in dem solche Druck- und Temperaturbedingungen

...

herrschen, daß das Ethylen und gegebenenfalls vorhandene
Comonomere in einer oder mehreren Stufen von dem im Reaktor gebildeten Polymeren abgetrennt wird.

Wegen der hohen Reaktivität von Ziegler-Katalysatoren ist
bei ihrer Verwendung nicht auszuschließen, daß noch vorhandene Monomere auch im Separator und im Gaskreislaufsystem polymerisiert werden, wobei es zur Bildung unerwünschter, niedermolekularer Produkte wie Wachse, kommt,
die die Qualität des Polymerisats beeinträchtigen. Überdies
können Betriebsstörungen durch Bildung schwer zu beseitigender Beläge aus Polymerisat in Leitungen, Kühlern und Abscheidern auftreten.

Um eine Nachpolymerisation in den Abscheide- und Kühlapparaten des Gaskreislaufsystems zu verhindern, setzt man dem
Reaktionsgemisch nach Verlassen des Reaktors Substanzen
zu, die den Katalysator desaktivieren.

Aus der DE-OS 26 07 601 ist es bekannt, für diesen Zweck
Alkali- und/oder Erdalkalisalze gesättigter Fettsäuren oder
aromatischer Carbonsäuren oder auch Zinkstearat einzusetzen.
Hierbei handelt es sich um schwerlösliche Verbindungen, die als
heiße Lösungen oder als Suspensionen in Kohlenwasserstoffen
gehandhabt werden müssen. Es kommt daher häufig zu Leitungsverstopfungen, die ein sofortiges Abstellen der Gesamtanlage
erforderlich machen. Ferner gelangen erhebliche Mengen Lösungsmittel in den Gaskreislauf, die mit dem Produkt ausgetragen oder anderweitig entfernt werden müssen. Bei der
Einspeisung der Salze als Schmelze ist die Gefahr von Leitungsverstopfungen noch größer und eine homogene Verteilung des Desaktivators schwierig. Darüber hinaus verlangt
das Pumpen von Salzschmelzen unter hohem Druck einen erheblichen technischen Aufwand. Schließlich ist eine völlige

...

Unterbindung der Polymerisation hinter dem Reaktor nur dann möglich, wenn große Mengen der desaktivierenden Verbindung zugesetzt werden. Die dabei entstehenden Umsetzungsprodukte werden im Kreis dem Reaktor wieder zugeleitet und führen zu einer Beeinträchtigung der Polymerisationsreaktion durch Minderung der Katalysatoraktivität.

Es bestand daher die Aufgabe, Verbindungen zu finden, die sich vollständig mit dem im Monomeren-Polymeren-Gemisch enthaltenen Katalysatorsystem zu nichtflüchtigen und nichtpolymerisationsaktiven Verbindungen umsetzen, leicht dosierbar sind und sich ohne Schwierigkeiten im Reaktionsgemisch homogen verteilen. Darüber hinaus sollen diese Verbindungen in lebensmittelrechtlicher Hinsicht unbedenklich sein und in den Produktionsanlagen keine Korrosionsprobleme hervorrufen.

Erfindungsgemäß wird die Aufgabe gelöst durch ein Verfahren zur Polymerisation von Ethylen oder zur Copolymerisation von Ethylen mit einem $\alpha$-Olefin in einem rohrförmigen Reaktor oder in einem Autoklaven und in Gegenwart eines Katalysatorsystems, das aus einer Übergangsmetallverbindung und einer organischen Aluminiumverbindung besteht bei Drücken von 300 bis 3.500 bar und Temperaturen zwischen 150 und 350 °C, wobei das Katalysatorsystem mit einer ausreichenden Menge wenigstens eines desaktivierenden Stoffes so behandelt wird, daß die Reaktionsprodukte der Desaktivierung im Polymeren verbleiben können, dadurch gekennzeichnet, daß als desaktivierende Stoffe Polyglykole eingesetzt werden.

Überraschenderweise besitzen die erfindungsgemäß als desaktivierende Stoffe eingesetzten Polyglykole die vorstehend geschilderten Nachteile der bekannten Desaktivatoren nicht.

...

Es hat sich gezeigt, daß die erfindungsgemäßen Desaktivatoren problemlos in Hochdruckapparaturen eindosiert werden können. Aktive Katalysatorreste, die den Reaktor verlassen, werden selbst bei Einsatz sehr geringer Desaktivatormengen quantitativ und irreversibel desaktiviert. Dabei verbleibt der Desaktivator entweder im Reaktionsprodukt oder er wird in den nachgeschalteten Abscheidern abgetrennt, so daß das Kreisgas ohne jegliche Beeinträchtigung der Polymerisation in den Reaktor zurückgeführt werden kann. Für den Prozeß schädliche Zersetzungsprodukte werden nicht gebildet und die Produktqualität erfährt durch die Desaktivatoren keine Beeinträchtigung.

Unter Polyglykolen werden oligomere oder polymere Ether verstanden, die in bekannter Weise z.B. durch Oligomerisierung oder Polymerisation von Epoxiden wie Ethylenoxid oder Propylenoxid mit Alkoholen als Starter hergestellt werden (vgl. z.B. Ullmanns Encyklopädie der technischen Chemie, 4. Auflage (1980), Band 19, Seiten 31 ff). Die Polyglykole können aus gleichen oder verschiedenen Monomeren aufgebaut werden, d.h. reine Polyethylenglykole, reine Polypropylenglykole oder Produkte mit gemischter Zusammensetzung sein. Verwendbar sind auch Polyglykole, deren hydroxylische Endgruppen z.B. durch Veretherung, Veresterung oder Silylierung umgewandelt wurden.

Für die Desaktivierung unter den Bedingungen der Hochdruckpolymerisation sind besonders Polyglykole geeignet, die aufgrund ihrer molekularen Struktur bei Zimmertemperatur flüssig und/oder in Lösungsmitteln, bevorzugt in Kohlenwasserstoffen löslich sind und als Lösung oder auch ohne Lösungsmittel flüssig eingesetzt werden können. Hierdurch ist ihre leichte Dosierbarkeit gewährleistet. Derartige Polyglykole werden z.B. durch Mischpolymerisation von

...

Ethylenoxid und Propylenoxid hergestellt, wobei die gewünschten Eigenschaften durch die Wahl des Ethylenoxid-Propylenoxid-Verhältnisses erzielt werden.

Um Polyglykole im Rückgassystem leicht abscheiden zu können, sollen sie ein Mindestmolekulargewicht aufweisen. Zu hohe Molekulargewichte sind ungünstig, weil u.a. mit steigendem Molekulargewicht die desaktivierende Wirkung der Polyglykole nachläßt. Bewährt haben sich Polyglykole mit Molekulargewichten zwischen 500 und 10.000. Besonders bevorzugt sind solche mit Molekulargewichten zwischen 1.000 und 5.000.

Die desaktivierende Wirkung der Polyglykole beruht sehr wahrscheinlich auf Komplexbildungsreaktionen des Sauerstoffatoms im Ethermolekül mit den im Katalysator enthaltenen Metallatomen, wobei die Reaktion mit dem Übergangsmetall bevorzugt und irreversibel verläuft. Die in den Polyglykolen vorhandenen Hydroxyl-Endgruppen scheinen dagegen für die Desaktivierungswirkung nur von geringer Bedeutung zu sein.

Die Einspeisung der Polyglykole in das Reaktorsystem kann in reiner Form oder als Lösung erfolgen. Geeignete Lösungsmittel sind insbesondere aliphatische und aromatische Kohlenwasserstoffe, die als reine Substanzen oder als Mischungen verwendet werden können.

Die in dem erfindungsgemäßen Verfahren eingesetzten Ziegler-Katalysatoren bestehen aus einer Übergangsmetallverbindung, im allgemeinen einer Titanverbindung. Besonders geeignet ist Titantrichlorid, das mit Aluminiumchlorid mischkristallisiert ist. Mit Erfolg finden ferner Titan-Magnesium-

...

Trägerkatalysatoren Anwendung, die in bekannter Weise z.B. durch Reaktion von Ti(III)- oder Ti(IV)-verbindungen mit Magnesiumverbindungen erhalten werden können. Zweiter Bestandteil des Katalysatorsystems ist eine organische Aluminiumverbindung. Hierzu zählen Monoalkylaluminiumdihologenide, Dialkylaluminiummonohalogenide und insbesondere Trialkylaluminiumverbindungen. Die in den organischen Aluminiumverbindungen enthaltenen Alkylreste enthalten üblicherweise jeweils 2 bis 20 Kohlenstoffatome.

Das erfindungsgemäße Verfahren ist sowohl für die Homopolymerisation von Ethylen geeignet, als auch für die Copolymerisation von Ethylen mit anderen $\alpha$-Olefinen. Solche $\alpha$-Olefine sind z.B. Propylen, Buten-1 und Hexen-1. Sie sind im Polymerisat üblicherweise in Mengen bis 10 Gew.-% enthalten.

Die Polymerisation oder Copolymerisation des Ethylens wird in Autoklaven oder in Rohrreaktoren durchgeführt.

Die Reaktionstemperatur beträgt 150 bis 350 °C und insbesondere 170 bis 280 °C, der Reaktionsdruck liegt oberhalb 500 bar und beträgt insbesondere 800 bis 1.600 bar. Bei Verwendung von Rohrreaktoren werden die Monomeren zunächst auf 130 bis 180 °C aufgeheizt. Darauf dosiert man das Katalysatorsystem zu. Durch die freiwerdende Polymerisationswärme steigt die Temperatur des Reaktionsgemisches auf Werte von 150 bis 350 °C an. Danach fällt sie durch Wärmeabführung nach außen langsam wieder ab. Die Polymerisation kann durch Zugabe geeigneter Agenzien gesteuert werden; so fügt man den Monomeren zur Einstellung eines bestimmten Molekulargewichtsbereiches z.B. Wasserstoff zu. Nach einer Verweilzeit von 30 bis 240 sek. im Reaktor wird das Reaktionsgemisch im Hochdruckabscheider auf 150 bis 300 bar entspannt.

...

Das nichtumgesetzte Ethylen wird abgekühlt, erneut komprimiert und dem Reaktor wieder zugeführt.

Die Polymerisation nach dem erfindungsgemäßen Verfahren
erfolgt kontinuierlich. Daher müssen die Desaktivatoren in
das Reaktionsgemisch an einer Stelle eingeführt werden,
wo die Polymerisation abgebrochen werden soll. Dieser
Punkt kann sowohl vor als auch nach dem Reaktorauslaßventil liegen. Nach einer zweckmäßigen Ausgestaltung der neuen
Arbeitsweise speist man den Desaktivator unmittelbar vor oder
unmittelbar nach dem Reaktorauslaßventil ein. Nach einer
anderen bevorzugten Ausführungsform des erfindungsgemäßen
Verfahrens setzt man bei Durchführung der Polymerisation in
einem rohrförmigen Reaktor den Desaktivator an einer Stelle,
die 1/5 bis 1/2 der Reaktorlänge vor dem Auslaßventil liegt,
zu. Andere geeigente Einspeisungsstellen sind bestimmte
Punkte des Abscheiders und des Rückgassystems.

Die zudosierte Polyglykolmenge muß ausreichen, um die Desaktivierung des Katalysatorsystems sicherzustellen. Diese
Desaktivierung wird erreicht, wenn wenigstens eine Komponente des Katalysatorsystems, d.h. entweder die Obergangsmetallverbindung oder die organische Aluminiumverbindung
mit dem Desaktivator reagiert hat. Üblicherweise setzt
man die desaktivierenden Stoffe in einer Menge von 0,1 bis
0,02 Mol und insbesondere von 0,02 bis 0,005 Mol je Mol
Aluminium und Übergangsmetall zusammengenommen ein.

In den folgenden Beispielen wird die Erfindung näher erläutert, ohne sie in ihrem Schutzumfang zu begrenzen.

...

## Beispiele

Die in den Beispielen beschriebene Ethylenpolymerisation wird in einem Autoklaven bei 1.500 bar und einer mittleren Reaktionstemperatur von 230 °C (eingestellt über die Katalysatorzugabe) durchgeführt. Die Molekulargewichtsregelung erfolgt mit Wasserstoff, der in einer Menge von 1 Vol.-% (bezogen auf Ethylen) zugesetzt wird. Die mittlere Verweilzeit des Gemisches aus Schmelze und Monomeren im Reaktor beträgt 52 Sekunden. Als Katalysator wird violettes Titantrichlorid in Form von $TiCl_3 \cdot 1/3\ AlCl_3$ und Tri-n-octylaluminium als Aktivator verwendet. Es wird jeweils soviel Katalysator/Aktivator zudosiert, daß die vorgegebene Reaktionstemperatur konstant bleibt.

Das nicht umgesetzte Ethylen wird von der Polymerschmelze in zwei dem Reaktor nachgeschalteten Abscheidern, einem Hochdruckabscheider, der bei 250 bar und 200 °C und einem Niederdruckabscheider, der bei 5 bar und 180 °C betrieben wird, abgetrennt und zurückgeführt.

Die untersuchten Desaktivatoren werden in Form verdünnter Benzinlösungen unmittelbar hinter dem Regelventil des Reaktors eingespritzt. Ihre Menge wird sukzessive reduziert bis ein deutlicher Temperaturanstieg im Hochdruck-Abscheider eintritt. Die so ermittelte Menge ist die Minimalmenge in der der Desaktivator eingesetzt werden muß.

Die Versuche sind in der nachfolgenden Tabelle zusammengefaßt. Sie wurden kontinuierlich durchgeführt.

...

| Desaktivator | | | Katalysatorverbrauch (mmol Ti/kg PE) | Reaktionstemp. (°C) |
|---|---|---|---|---|
| | Molgewicht | Minimalmenge bez.auf Fest- stoff (g/h) | | |
| Polyglykol | | | | |
| Beispiel 1 | 2.300 | 0,5 | 0,44 | 230 |
| Beispiel 2 | 2.000 | 0,4 | 0,56 | 230 |
| Beispiel 3 | 1.400 | 0,2 | 0,68 | 230 |
| Tetraglym[+] | | | | |
| Beispiel 4 | 222 | 0,1 | - | (Temperatur- einbruch bis auf 180 °C) |

[+] Tetraethylenglykoldimethylether

R 1956

0140131

Die Tabelle zeigt, daß bei Einsatz von Polyglykol der
Katalysatorverbrauch mit fallendem Molekulargewicht
zwar leicht ansteigt, die Reaktionstemperatur jedoch
problemlos gehalten werden kann.

Ganz anders verhält sich hingegen Tetraglym als Desaktivator. Dieser Stoff ist aufgrund seines niedrigen Molekulargewichts so flüchtig, daß geringe Mengen ausreichen, um
das Kreisgas zu schädigen, so daß die Reaktion binnen
kurzer Zeit zusammenbricht.

Ruhrchemie Aktiengesellschaft, Oberhausen 11


### Patentansprüche

1. Verfahren zur Polymerisation von Ethylen oder zur Copolymerisation von Ethylen mit einem $\alpha$-Olefin in einem rohrförmigen Reaktor oder in einem Autoklaven und in Gegenwart eines Katalysatorsystems, das aus einer Übergangsmetallverbindung und einer organischen Aluminiumverbindung besteht, bei Drücken von 300 bis 3.500 bar und Temperaturen zwischen 150 und 350 °C, wobei das Katalysatorsystem mit einer ausreichenden Menge wenigstens eines desaktivierenden Stoffes so behandelt wird, daß die Reaktionsprodukte der Desaktivierung im Polymeren verbleiben können, dadurch gekennzeichnet, daß als desaktivierende Stoffe Polyglykole eingesetzt werden.

2. Verfahren nach Anspruch 1, dadurch gekennzeichnet, daß sich die Polyglykole von Ethylenoxid und/oder Propylenoxid als monomeren Einheiten ableiten.

3. Verfahren nach Anspruch 1 und 2, dadurch gekennzeichnet, daß die Polyglykole Molekulargewichte zwischen 500 und 10.000, insbesondere zwischen 1.000 und 5.000 aufweisen.

4. Verfahren nach Anspruch 1 bis 3, dadurch gekennzeichnet, daß die Polyglykole durch Oligomerisation bzw. Polymerisation von Ethylenoxid mit Propylenoxid hergestellt werden.

...

5. Verfahren nach Anspruch 1 bis 4, dadurch gekennzeichnet, daß die Polyglykole unmittelbar vor oder unmittelbar nach dem Reaktorauslaßventil eingespeist werden.

6. Verfahren nach Anspruch 1 bis 4, dadurch gekennzeichnet, daß bei Durchführung der Polymerisation in einem rohrförmigen Reaktor die Polyglykole an einer Stelle, die 1/5 bis 1/2 der Reaktorlänge vor dem Auslaßventil liegt, in den Reaktor eingespeist werden.

7. Verfahren nach Anspruch 1 bis 6, dadurch gekennzeichnet, daß die Polyglykole in einer Menge von 0,1 bis 0,02 mol, insbesondere von 0,02 bis 0,005 mol/mol Aluminium und Übergangsmetall zusammengenommen, eingesetzt werden.